# EUROPÄISCHE PATENTANMELDUNG

(11) **EP 1 271 989 A2**
(43) Veröffentlichungstag der Anmeldung: **02.01.2003**
(21) Anmeldenummer: 02100740.6
(22) Anmeldetag: 21.06.2002
(51) Int. Cl.: H04Q 7/38

(54) **Verfahren zum Bereitstellen von Multimedia Messaging Service (MMS) -spezifischen Daten, entsprechende Vorrichtungen und Software-Programme**

(30) Priorität: 25.06.2001 DE 10130538
(71) Anmelder: SIEMENS AKTIENGESELLSCHAFT, 80333 München (DE)
(72) Erfinder: Dannehr, Boris, 38550, Isenbüttel (DE); Wuschke, Martin, 38527, Meine (DE)
(74) Vertreter: Wiedemann, Albert, Dipl.-Ing. (FH)

(57) **Zusammenfassung**

Die Erfindung betrifft ein Verfahren zum Bereitstellen von Multimedia Messaging Service (MMS)-spezifischen Daten, die einem einen paketvermittelten MMS-Dienst nutzenden Teilnehmer zugeordnet sind, wobei die MMS-spezifischen Daten in das Home Location Register (HLR) oder in den Home Subscriber Server (HSS) des Teilnehmers eingetragen werden und von dort durch einen Netzwerkknoten (Serving GPRS Supporting Node, SGSN) des Kernnetzes (Core Network) und/oder durch einen Netzwerkknoten (MMS-Relay) eines externen Netzes (PDN) abrufbar und/oder empfangbar sind. Des weiteren werden ein entsprechendes, auf der Seite des SGSN und/oder des MMS-Relay durchzuführendes Verfahren sowie entsprechende Vorrichtungen und Software-Programme vorgeschlagen.

## Beschreibung

Die Erfindung betrifft ein Verfahren zum Bereitstellen von Multimedia Messaging Service (MMS)-spezifischen Daten, die einem einen paketvermittelten MMS-Dienst nutzenden Teilnehmer zugeordnet sind.

Des weiteren betrifft die Erfindung entsprechende Vorrichtungen und Software-Programme.

In der Mobilfunktechnologie ist es vorgesehen, mittels sog. Multimedia Messaging Service (MMS) neue Möglichkeiten der Zurverfügungstellung und Übertragung von Daten zu erschließen. Multimedia Messaging Service-Inhalte bestehen aus einem oder mehreren Elementen, wie Text, Sprache, Bildern und Video. Genaueres hierzu findet sich in den Publikationen von 3GPP (3^{rd} Generation Partnership Project) und ETSI (European Telecommunications Standards Institute), deren Inhalte - wie auch die der anderen im folgenden genannten Dokumente - hiermit explizit in die Offenbarung einbezogen werden. Hinsichtlich der Realisierung von Multimedia Messaging Service Diensten wird beispielsweise auf 3GPP TS 22.140 V4.0.1 und 3GPP TS 23.140 V4.1.0 verwiesen.

Die Übertragung von Daten in der Technologie der zweiten Mobilfunkgeneration (insbes. GSM, Global System for Mobile Communications) und der dritten Mobilfunkgeneration (insbes. UMTS, Universal Mobile Telecommunication System) erfolgt entweder leitungs- oder paketvermittelt. Im letzteren Fall werden die Daten in einzelnen Datenpaketen mittels eines sog. Packet Data Protocol (PDP), beispielsweise IP, übertragen. Zur Definition des PDP-Typs siehe auch GSM03.60 bzw. 3G TS23.060 und hierbei insbesondere Kapitel 9 und Annex A von 3G TS23.060.

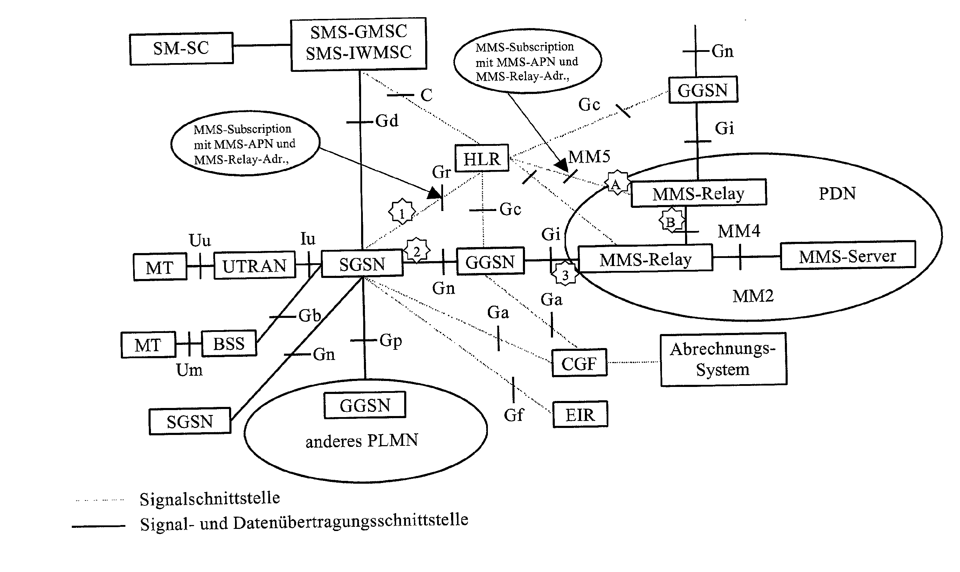

Die vorliegende Erfindung liegt auf dem Gebiet der paketvermittelten Datenübertragung. Paketvermittelte Dienste werden in der GSM- und der UMTS-Struktur durch das Zusammenschalten von zwei Arten von Netzwerkknoten, mindestens einem Serving GPRS Support Node (SGSN) und mindestens einem Gateway GPRS Support Node (GGSN) logisch implementiert, die Bestandteil des Kernnetzes, des sog. Core Network, sind. Das MMS-Relay sowie der MMS-Server sind Netzwerkelemente im Zuständigkeitsbereich eines MMS Service Providers, die den verschiedenen Benutzern die MMS-Funktionalität zur Verfügung stellen. Einen Überblick über die logische Architektur der sog. Packet Domain (PD) einschließlich einer Beschreibung findet sich in ETSI GSM 12.15 V6.2.0 und 3G TS 32015 V3.4.0, s. insbes. die dortigen Figuren 1.

Wie anhand nachfolgender Beispiele deutlich wird, sind jedoch noch viele Probleme der Datenspeicherung und der Datenzurverfügungstellung ungelöst.

In bestimmten Fällen kann ein Netzbetreiber beispielsweise ein Interesse daran haben, daß abgehende und ankommende Multimedia-Nachrichten für einen bestimmten Teilnehmer immer über ein bestimmtes MMS-Relay geführt werden. Dies ist insbesondere wichtig, wenn man zwar einen Access Point Name (APN) hat, der den Ort der Gi-Schnittstelle zwischen einem SGSN und einem GGSN beschreibt, jedoch damit nicht zwingend das MMS-Relay adressiert. Normalerweise würde die Adressierung eines Knotens in einem paketvermittelten Netz, das über die Gi-Schnittstelle an das GGSN angeschlossen ist, über die Applikation in der Mobilstation erfolgen. Es ist jedoch noch keine einfache Realisierungsmöglichkeit vorgeschlagen worden, wie ein Benutzer die IP-Adresse seines speziellen MMS-Relays in Erfahrung bringen könnte. Dies wird umso komplizierter, je mehr MMS-Relays über die Gi-Schnittstelle an die GGSNs (das Endungs-s bei Abkürzungen kennzeichnet hier wie auch im folgenden den Plural) eines Netzbetreibers angeschlossen sind. Das Problem der Adressierung des richtigen MMS-Relays für abgehende Multimedia-Nachrichten könnte zwar über das Festlegen eines Multimedia-APN und der IP-Adresse des MMS-Relays durch die Mobilstation (MS) bzw. verallgemeinert das User Equipment (UE) gelöst werden. Dazu müßte der Netzbetreiber jedoch jedem seiner Kunden eine individuelle Kombination aus APN und IP-Adresse des MMS-Relays zuweisen. Dies ist aufwendig.

Des weiteren wird üblicherweise im SGSN bei der Aktivierung von PDP-Kontexten ein sogenannter "Subscription Check" durchgeführt, d.h. es wird überprüft, ob ein Teilnehmer überhaupt die Berechtigung hat, einen bestimmten Dienst zu nutzen. Eine einfache Realisierungsmöglichkeit für eine solche Berechtigungsabfrage bei der Nutzung von MMS-Diensten ist bisher jedoch nicht vorgeschlagen worden.

Ein weiteres Problem ergibt sich beispielsweise beim Zustellen von Multimedia-Nachrichten an einen Mobilfunkteilnehmer (Dienst MMS-MT, Multimedia Messaging Service - Mobile Terminated). Es ist wie im Falle von "Internet electronic mail" (e-mail) vorgesehen, daß eine MMS-Nachricht solange in einem MMS-Server gespeichert wird, bis sie vom Benutzer abgeholt wird. Die Benachrichtigung, daß eine neue MMS-Nachricht vorliegt, erfolgt über eine SMS-MT (Short Message Service - Mobile Terminated) an den Benutzer. Das Konzept des Multimedia-Dienstes sieht vor, daß ankommende MMS-Nachrichten für einen Teilnehmer immer über das gleiche MMS-Relay zum MMS-Server geroutet werden. Es ist jedoch bisher nicht bekannt, wie dies zu bewerkstelligen sein könnte.

Es ist Aufgabe der vorliegenden Erfindung, eine einfache Realisierung der Zurverfügungstellung und der Übertragung von MMS-spezifischen Daten bei der Nutzung eines MMS-Dienstes zu ermöglichen.

Diese Aufgabe wird bei einem Verfahren der eingangs genannten Art durch die Merkmale des Anspruchs 1 gelöst.

Weiterhin wird diese Aufgabe durch die Merkmale des Anspruchs 10 und hinsichtlich der Vorrichtungen und Software-Programme bzw. Software-Programm-Erzeugnisse mit den Merkmalen der unabhängigen Ansprüche 13, 15, 16, 17 und 18 gelöst.

Die Vorteile der Erfindung sind insbesondere darin zu sehen, daß die MMS-spezifischen Daten in das HLR (Home Location Register) oder den Home Subsriber Server (HSS) des Teilnehmers eingetragen werden. Der HSS soll nach der aktuellen Planung die HLR-Funktionalität heutiger PLMN-Netze (Public Land Mobile Network) übernehmen bzw. ergänzen. Vom HLR oder vom HSS können die jeweils relevanten Daten an die mit dem HLR oder dem HSS verbundenen Netzwerkknoten übertragen werden. Diese Lösung macht demnach Gebrauch vom HLR bzw. vom HSS, welche Teilnehmer-individuelle Packet Domain (PD) Daten und Routing-Informationen enthalten und - zumindest im Falle des HLR - insbesondere über die Gr-Schnittstelle vom SGSN und über die MM5-Schnittstelle von einem MMS-Relay zugänglich sind. Die Erfindung liefert somit eine Umsetzung von nur verbalen Anforderungen aus 3G TS23.140V4.1.0, in der keine Angaben darüber gemacht sind, welche Daten in welchen Registern abgelegt werden.

Da das HLR bisher nur über das MAP (Mobile Application Part)-Protokoll angesprochen wurde, bietet es sich an, auf den entsprechenden Schnittstellen ebenfalls das MAP-Protokoll zu verwenden, welches zur Übertragung der erfindungsgemäß im HLR gespeicherten Daten hierzu zweckmäßigerweise erweitert wird. Mit dieser Erweiterung ist es dann möglich, die jeweiligen MMSrelevanten Daten über die genannten Schnittstellen zu übertragen. Auch für die Kommunikation mit dem HSS bietet sich vorteilhafterweise ein erweitertes MAP-Protokoll an.

Desweiteren bietet die vorliegende Erfindung eine vollständige Roaming-Unterstützung. Für das Roaming von Mobilstationen dürfen HLR bzw. HSS und SGSN sich in unterschiedlichen PLMNs befinden.

Bei einer besonders bevorzugten Weiterbildung der Erfindung wird ein MMS-spezifischer APN in das HLR oder das HSS des Teilnehmers eingetragen, um von dort an das vom Teilnehmer angewählte SGSN übertragen zu werden. Das SGSN kann dann anhand dieses APN ein GGSN anwählen und diesem die zu versendende MMS-Nachricht zur Weitergabe an ein PDN übermitteln.

Zudem ermöglicht die Erfindung eine bereits im SGSN erfolgende Berechtigungsabfrage zur Nutzung eines MMS-Dienstes (Subscriptions-Check). Hierzu werden vorteilhafterweise diese Nutzungsberechtigung wiedergebende Daten des Teilnehmers in das betreffende HLR bzw. HSS eingetragen, von dem sie zum entsprechenden SGSN übertragbar sind.

Eine weitere bevorzugte - alternative oder zusätzliche - Ausführungsform der Erfindung sieht vor, daß die einem Teilnehmer zugeordnete MMS-Relay-Adresse in das HLR oder das HSS dieses Teilnehmers eingetragen wird und von dort abrufbar und/oder empfangbar ist. Dieses Vorgehen erlaubt es auf einfache Weise, daß die Mobilstation (allgemein das User Equipment) bzw. das SGSN in Erfahrung bringen kann, an welches MMS-Relay eine MMS-Nachricht versendet werden soll. Die MMS-Relay-Adresse kann hierbei von der Multimedia-Applikation der Mobilstation des Teilnehmers oder vom GGSN, mit welchem sich das SGSN verbunden hat, angewählt werden.

In der anderen Übertragungsrichtung kann die dem Teilnehmer zugeordnete, im HLR abgelegte MMS-Relay-Adresse ebenfalls genutzt werden. Der Teilnehmer ist in diesem Fall der Empfänger einer MMS-Nachricht. Das MMS-Relay des Absenders kann dann vom HLR oder vom HSS des Teilnehmers die MMS-Relay-Adresse für das MMS-Relay des Teilnehmers bzw. Empfängers erhalten und zur Weiterleitung an dieses MMS-Relay verwenden.

Damit dient die Erfindung zur einfachen Identifizierung eines dem Teilnehmer zugeordneten MMS-Relays, insbesondere für die Versendung und den Empfang von MMS-Nachrichten. Die eindeutige Zuordnung eines eindeutigen MMS-Relays zu einem Mobilteilnehmer für alle abgehenden und ankommenden Multimedia-Nachrichten ermöglicht somit auch die MMS-Leistungsmerkmale "readreply" und "reply-message", die in der Spezifikation 3G TS22.140V4.0.1 und 3G TS23.140V4.1.0. näher erläutert sind.

Die Erfindung betrifft neben der Eintragung der genannten MMS-spezifischen Daten in das HLR oder das HSS eines Teilnehmers auch das Zurverfügungstellen und Übertragen dieser Daten zum SGSN bzw. zu einem MMS-Relay, damit in diesen Netzwerkknoten die entsprechenden Informationen ausgewertet und ggf. die entsprechenden Verbindungen zu anderen Netzwerkknoten hergestellt werden können.

Es bietet sich vorteilhafterweise an, daß bei Aufruf eines MMS-Dienstes über die Mobilstation eines Teilnehmers ein PDP-Kontext mit einem MMS-spezifischen PDP-Typ im Feld PDP-Typ mitaktiviert wird. Eine solche Neueinführung eines PDP-Typs bietet den Vorteil, daß dieser Typ provider- und netzunabhängig ist und somit eine Roaming-Unterstützung gewährleistet ist. Das betreffende SGSN und das mit dem SGSN gerade verbundene GGSN können dann anhand des MMS-spezifischen PDP-Typs erkennen, daß der Teilnehmer einen MMS-Dienst angewählt hat. Im SGSN und GGSN ist es also anhand des neuen PDP-Typs "MMS" bekannt, daß über diesen PDP-Kontext eine oder mehrere MMS-Nachrichten ausgetauscht werden. Insbesondere der SGSN kann diese Information dazu benutzen, daß die von ihm benötigten Daten - insbesondere der MMS-spezifische APN und/oder die MMS-Relay-Adresse - aus dem HLR oder dem HSS zu ihm übertragen werden.

Vorteilhafte Weiterbildungen der Erfindung sind durch die Merkmale der Unteransprüche gekennzeichnet.

Im folgenden werden zwei Ausführungsbeispiele der Erfindung anhand der Zeichnung näher erläutert. Die einzige Figur zeigt hierbei eine Netzstruktur paketvermittelter Datendienste und die Anbindung eines MMS-Relays, wie sie im wesentlichen Stand der Technik ist. Die dargestellte Netzstruktur entspricht im wesentlichen der Packet-Domain logischen Architektur, wie sie beispielsweise aus der Fig. 2 der 3G TS23.060 bekannt ist. Zur Erläuterung der vorliegenden Erfindung ist lediglich ein Ausschnitt aus dieser Architektur von Bedeutung. Für weitere Details wird auf die obigen Quellen verwiesen.

Ein als Mobile Station (MS) oder auch als User Equipment (UE) bezeichnetes Endgerät enthält in einer als Mobile Termination MT gekennzeichneten Vorrichtung alle zur Funkübertragung notwendigen Funktionen und weiterhin eine Teilnehmerschnittstelle am (nicht dargestellten) Terminal TE, über die Ende-zu-Ende-Verbindungen zwischen Anwendungen realisiert werden. Über einen Bezugspunkt Uu ist das MT mit einem Zugangsnetz zur Ermöglichung des Zugangs zum UMTS-Netz verbunden. Das Zugangsnetzwerk, auch AND (Access Network Domain) genannt, kann gemäß der Figur entweder durch ein UTRAN (UMTS Terrestrial Radio Access Network) oder durch ein GSM-BSS (Global System for Mobile Communication - Base Station (Sub)System) realisiert werden. Ein MT kann über das UTRAN mittels einer sog. Iu-Schnittstelle oder über das BSS mittels einer Schnittstelle Gb mit der Core Network Domain verbunden werden.

Die Core Network Domain ist im wesentlichen mittels zweier Netzwerkknoten implementiert. Dies ist einerseits das SGSN (Serving GPRS Support Node) und andererseits das GGSN (Gateway GPRS Support Node). Das SGSN kann somit GPRS sowohl für GSM als auch UMTS unterstützen. Das SGSN und das GGSN sind über eine Schnittstelle Gn miteinander verbunden. Wie im unteren Teil der Figur angedeutet, kann das SGSN mit weiteren SGSNs oder GGSNs des eigenen Netzes, aber auch anderer Netze kommunizieren ("anderes PLMN").

Das GGSN kann über eine Schnittstelle Gi mit einem MMS-Relay Verbindung aufnehmen, welches über eine Schnittstelle mit einem MMS-Server (Multimedia Messaging Service - Server) verbunden ist. Das MMS-Relay und der MMS-Server sind Bestandteil eines PDN (Public Data Network). Die spezifische PDP-Adresse (Packet Data Protocol) wird duch das PDN evaluiert.

In einem sog. Home Location Register (HLR) sind üblicherweise Packet Domain (PD) Daten entsprechend den individuellen Daten von einzelnen Teilnehmern und Routing-Informationen enthalten. Hierbei ist das HLR u.a. über eine sog. Gr-Schnittstelle vom SGSN, über eine sog. Gc-Schnittstelle vom GGSN und über eine sog. MM5-Schnittstelle von einem MMS-Relay zugänglich.

Es ist vorgesehen, daß die HLR-Funktionalität heutiger PLMN-Netze von einem HSS (Home Subscriber Server) übernommen bzw. ergänzt wird. Die entsprechenden Protokolle und Schnittstellen sind dann hieran anzupassen. Zwar wird die Erfindung im folgenden anhand des Einsatzes eines HLR erläutert; grundlegende Unterschiede gegenüber dem Einsatz eines HSS bestehen aber nicht.

Ein erstes Ausführungsbeispiel der Erfindung beschäftigt sich mit einer vom Teilnehmer veranlaßten Inanspruchnahme eines Multimedia-Dienstes, dem sog. Multimedia Message Service - Mobile Originated, abgekürzt MMS-MO. Hierbei aktiviert der Benutzer über sein MT einen PDP-Kontext mit einem neu definierten MMS-spezifischen PDP-Typ, der den beispielhaften Namen "MMS" trägt. Ein Access Point Name (APN) wird hierbei nicht angegeben. Stattdessen ist erfindungsgemäß ein MMS-spezifischer APN (hier MMS-APN genannt) im HLR gespeichert und wird zum SGSN übertragen (s. im Stern eingefaßtes Bezugszeichen "1" in der Figur). Der APN gibt den logischen Punkt der Gi-Schnittstelle an und kann zur Auswahl des GGSN verwendet werden. Außerdem kann der APN zur Auswahl des an das GGSN angeschlossenen externen Netzes (Packet Data Network, PDN) verwendet werden. Sobald ein PDP-Kontext vom Typ "MMS" etabliert wird, verwendet das SGSN diesen MMS-APN (eine Darstellung der Abläufe, die bei einer PDP-Kontext Aktivierung stattfinden, ist in GSM03.60 für GPRS und in 3G TS23.060 für UMTS gegeben).

Weiterhin wird vom HLR eine Bestätigung oder eine Verneinung hinsichtlich der Nutzungsberechtigung des Teilnehmers an das SGSN übermittelt und dort überprüft, ob der Benutzer überhaupt die Berechtigung hat, abgehende Multimedia-Nachrichten zu verschicken (sog. Subscription Check) (s. Bezugszeichen "1" in der Figur).

Ebenso ist im HLR die MMS-Relay-Adresse des dem Teilnehmer zugeordneten MMS-Relays eingetragen, die an das SGSN übertragen wird.

Diese Subskriptionsinformation, der MMS-APN und die MMS-Relay-Adresse werden über die Gr-Schnittstelle vom HLR zum SGSN übertragen. Dies ist in der Figur durch das Oval mit dem Pfeil auf die Gr-Schnittstelle angedeutet. Anhand des MMS-APN wählt der SGSN einen GGSN aus, über den die Verbindung aufgebaut werden soll (s. im Stern eingefaßtes Bezugszeichen "2" in der Figur). Die Adresse des MMS-Relay, über den die abgehende Multimedia-Nachricht geschickt werden soll, kann nun entweder von der Multimedia-Applikation der Mobilstation oder durch das GGSN gesetzt werden (s. im Stern eingefaßtes Bezugszeichen "3" in der Figur). Im letzteren Fall muß die MMS-Relay-Adresse bei der PDP-Kontext-Aktivierung vom SGSN zum GGSN übertragen werden (s. Bezugszeichen "2" in der Figur). Die Tatsache, daß es sich um eine Multimedia-Nachricht handelt, wird im SGSN und im GGSN anhand des PDP-Typs "MMS" erkannt.

Ein zweites Ausführungsbeispiel der Erfindung betrifft das Multimedia Message Service - Mobile Terminated, abgekürzt MMS-MT. Hierbei soll - im Gegensatz zum vorherigen Ausführungsbeispiel der Versendung einer MMS-Nachricht - eine ankommende Multimedia-Nachricht an einen Mobilteilnehmer zugestellt werden. Dazu fragt das MMS-Relay des Absenders das HLR des Zielteilnehmers, um das MMS-Relay des Empfängers zu bestimmen (s. im Stern eingefaßtes Bezugszeichen "A" in der Figur). Diese HLR-Abfrage läuft über die MM5-Schnittstelle und ist in der Figur durch das Oval mit dem Pfeil auf die MM5-Schnittstelle angedeutet. Im dargestellten Fall sind die MMS-Relays von Absender und Empfänger verschieden und befinden sich in demselben PDN. Die beiden MMS-Relays können jedoch auch identisch sein. Ebenso können die beiden MMS-Relays in unterschiedlichen PDNs angeordnet sein. Die Abfrage liefert dem sendenden MMS-Relay die Adresse des MMS-Relays des Empfängers. An diese Adresse wird dann die MMS vom MMS-Relay des Absenders über eine MM4-Schnittstelle zugestellt (s. im Stern eingefaßtes Bezugszeichen "B" in der Figur). Alle weiteren Schritte finden sich in 3G TS23.140V4.1.0. Da das HLR bisher immer über das MAP-Protokoll angesprochen wurde, bietet es sich an, auf dem MM5-Interface ebenfalls das MAP-Protokoll zu verwenden.

Die Erfindung ist insbesondere einsetzbar zur Ausführung der jeweiligen Verfahrensschritte bei Netzwerkknoten bzw. -elementen vom Typ SGSN, HLR, HSS und MMS-Relay. Die Implementierung erfolgt durch entsprechende, von der Erfindung mitumfaßte Software-Programme, die auf die genannten Vorrichtungen entsprechend ladbar und/oder auf diesen ablaufbar sind. Gleichfalls betrifft die Erfindung mobile Telekommunikationsgeräte wie beispielsweise Mobiltelephone, die einen eigenen Prozessor aufweisen oder mit einem Prozessor verbunden sind (z.B. demjenigen eines angeschlossenen Laptops, eines Notebook, eines Organizers u.ä.), wobei mittels dieser Anordnung die erfindungsgemäßen Verfahrensschritte durchgeführt bzw. veranlaßt werden können. Die Realisierung erfolgt ebenfalls durch Implementierung entsprechender Software-Programme.

Insbesondere umfaßt die Erfindung mobile Telekommunikationsgeräte mit einem Prozessor (oder mit einem Prozessor verbunden), der derart ausgeführt ist, daß der erwähnte zusätzliche PDP-Typ ("MMS") oder ein MMS-spezifischer APN bei Aktivierung eines PDP-Kontextes durch einen Benutzer mitaktivierbar sind. Insbesondere der zusätzliche PDP-Typ ("MMS") kann für eine Vielzahl von Signallisierungen verwendet werden. Beispielsweise kann anhand dieses neuen PDP-Typs im SGSN und/oder im GGSN erkannt werden, daß der Teilnehmer einen MMS-Dienst angewählt hat. Diese Information kann dann in diesen Netzwerkknoten verwendet werden, um MMSbezogene Signal- und/oder Datenübertragungen von oder zu anderen Netzwerkelementen zu veranlassen.

## Patentansprüche

1. Verfahren zum Bereitstellen von Multimedia Messaging Service (MMS)-spezifischen Daten, die einem einen paketvermittelten MMS-Dienst nutzenden Teilnehmer zugeordnet sind, wobei die MMS-spezifischen Daten in das Home Location Register (HLR) oder den Home Subcriber Server (HSS) des Teilnehmers eingetragen werden und von dort durch einen Netzwerkknoten (Serving GPRS Supporting Node, SGSN) des Kernnetzes (Core Network) und/oder durch einen Netzwerkknoten (MMS-Relay) eines externen Netzes (Packet Data Network, PDN) abrufbar und/oder empfangbar sind.

2. Verfahren nach Anspruch 1,
**dadurch gekennzeichnet,**
**daß** ein MMS-spezifischer Access Point Name (APN) in das HLR oder den HSS des Teilnehmers eingetragen wird und von dort durch das SGSN, das von dem Teilnehmer zur Versendung einer MMS-Nachricht angewählt wird, zur Auswahl eines die MMS-Nachricht weiterleitenden Gateway GPRS Supporting Node (GGSN) und/oder eines an das GGSN angeschlossenen externen Netzes (PDN) abrufbar und/oder empfangbar ist.

3. Verfahren nach einem der vorhergehenden Ansprüche,
**dadurch gekennzeichnet,**
**daß** Daten, die die Nutzungsberechtigung des Teilnehmers zur Nutzung eines MMS-Dienstes repräsentieren, in das HLR oder den HSS des Teilnehmers eingetragen werden und von dort vom SGSN, das der Teilnehmer zur Nutzung des MMS-Dienstes anwählt, abrufbar und/oder empfangbar ist.

4. Verfahren nach einem der vorhergehenden Ansprüche,
**dadurch gekennzeichnet,**
**daß** die Datenübertragung vom HLR oder vom HSS zum SGSN über die Gr-Schnittstelle unter Verwendung eines erweiterten MAP-Protokolls durchgeführt wird.

5. Verfahren nach einem der vorhergehenden Ansprüche,
**dadurch gekennzeichnet,**
**daß** die einem Teilnehmer zugeordnete MMS-Relay-Adresse in das HLR oder den HSS des Teilnehmers eingetragen wird und von dort abrufbar und/oder empfangbar ist, insbesondere durch ein SGSN und/oder ein MMS-Relay.

6. Verfahren nach Anspruch 5,
**dadurch gekennzeichnet,**
**daß** die dem Teilnehmer zugeordnete MMS-Relay-Adresse im HLR oder HSS des Teilnehmers zum SGSN des Teilnehmers übertragen wird, um dem SGSN zu ermöglichen, durch Weiterleitung der MMS-Relay-Adresse an ein GSGN mit dem zugehörigen MMS-Relay eines externen Netzes (PDN) in Verbindung zu treten.

7. Verfahren nach Anspruch 5 oder 6,
**dadurch gekennzeichnet,**
**daß** die MMS-Relay-Adresse von der Multimedia-Applikation der Mobilstation (MS) des Teilnehmers oder gemäß Anspruch 6 vom GGSN gesetzt wird.

8. Verfahren nach Anspruch 5,
**dadurch gekennzeichnet,**
**daß** die dem Teilnehmer zugeordnete und im HLR oder im HSS abgelegte MMS-Relay-Adresse derart im HLR oder im HSS bereitgestellt wird, daß das MMS-Relay eines Absenders einer MMS-Nachricht die MMS-Relay-Adresse des Teilnehmers zur Weiterleitung der MMS-Nachricht an das MMS-Relay des Teilnehmers abrufen und/oder empfangen kann.

9. Verfahren nach Anspruch 8,
**dadurch gekennzeichnet,**
**daß** die Datenübertragung vom HLR oder vom HSS zum MMS-Relay des die MMS-Nachricht versendenden Absenders über die MM5-Schnittstelle unter Verwendung eines erweiterten MAP-Protokolls durchgeführt wird.

10. Verfahren zur Handhabung von MMS-spezifischen Daten, die einem einen paketvermittelten MMS-Dienst nutzenden Teilnehmer zugeordnet und in das Home Location Register (HLR) oder den Home Subscriber Server (HSS) dieses Teilnehmers gemäß einem der vorhergehenden Ansprüche eingetragen sind, wobei ein Netzwerkknoten (SGSN) des Kernnetzes (Core Network) und/oder ein Netzwerkknoten (MMS-Relay) eines externen Netzes (PDN) diese MMS-spezifischen Daten aus dem HLR oder dem HSS empfängt und auswertet.

11. Verfahren nach Anspruch 10,
**dadurch gekennzeichnet,**
**daß** im SGSN und im GGSN anhand eines MMS-spezifischen PDP-Typs ("MMS") erkannt wird, daß der Teilnehmer einen MMS-Dienst angewählt hat, wobei dieser MMS-spezifische PDP-Typ bei Aufruf des MMS-Dienstes in einem Packet Data Protocol (PDP)-Kontext mitaktiviert wird.

12. Verfahren nach Anspruch 11,
**dadurch gekennzeichnet,**
**daß** die Erkennung des MMS-spezifischen PDP-Typs den SGSN veranlaßt, den MMS-spezifischen APN und/oder die MMS-Relay-Adresse aus dem HLR oder dem HSS zu verwenden.

13. Vorrichtung mit einem Prozessor, der derart eingerichtet ist, daß von ihm die Verfahrensschritte im HLR oder im HSS des Teilnehmers und/oder in den Netzwerkknoten (SGSN; MMS-Relay) des Kernnetzes oder des externen Netzes (PDN) gemäß einem der Ansprüche 1 bis 12 durchführbar sind.

14. Vorrichtung nach Anspruch 13,
**dadurch gekennzeichnet,**
**daß** sie als HLR, HSS, SGSN oder MMS-Relay ausgebildet ist.

15. Mobiles Telekommunikationsgerät mit einem Prozessor oder mit einem Prozessor verbunden, mittels dem bei Aktivierung eines PDP-Kontextes durch einen Benutzer ein zusätzlicher PDP-Typ ("MMS") oder ein MMS-spezifischer APN mitaktivierbar ist, um insbesondere die Verfahrensschritte nach einem der Ansprüche 1 bis 12 durchzuführen oder zu veranlassen.

16. Software-Programm, welches auf einer Vorrichtung mit einem Prozessor oder mit einem Prozessor verbunden, insbesondere einer Vorrichtung nach einem der Ansprüche 13 bis 15, derart ablaufen kann, daß das Software-Programm mitsamt der Vorrichtung einschließlich des Prozessors die Verfahrensschritte auf der Seite des HLR oder des HSS des Teilnehmers und/oder der Netzwerkknoten (SGSN; MMS-Relay) des Kernnetzes oder des externen Netzes (PDN) gemäß einem der Ansprüche 1 bis 12 ausführt oder veranlaßt.

17. Software-Programm, welches in eine Vorrichtung mit einem Prozessor oder mit einem Prozessor verbunden, insbesondere einer Vorrichtung nach einem der Ansprüche 13 bis 15, ladbar ist, so daß die derart programmierte Vorrichtung einschließlich des Prozessors fähig oder angepaßt ist, Verfahrensschritte auf der Seite des HLR oder des HSS des Teilnehmers und/oder der Netzwerkknoten (SGSN; MMS-Relay) des Kernnetzes oder des externen Netzes (PDN) gemäß einem der Ansprüche 1 bis 12 auszuführen oder zu veranlassen.

18. Software-Programm-Erzeugnis, das ein prozessorlesbares Speichermedium umfaßt, auf dem ein Programm gespeichert ist, welches es einer Vorrichtung mit einem Prozessor oder mit einem Prozessor verbunden, insbesondere einer Vorrichtung nach einem der Ansprüche 13 bis 15, nachdem es geladen worden ist, ermöglicht, die Verfahrensschritte auf der Seite des HLR oder des HSS des Teilnehmers und/oder der Netzwerkknoten (SGSN; MMS-Relay) des Kernnetzes oder des externen Netzes (PDN) gemäß einem der Ansprüche 1 bis 12 durchzuführen oder zu veranlassen.
